# EUROPÄISCHE PATENTSCHRIFT

(11) **EP 0 560 319 B1**
(45) Veröffentlichungstag und Bekanntmachung des Hinweises auf die Patenterteilung: **22.05.1996**
(21) Anmeldenummer: 93103829.3
(22) Anmeldetag: 10.03.1993
(51) Int. Cl.: A01B 49/02

(54) **Drehpflug**
Reversible plough
Charrue réversible

(30) Priorität: 10.03.1992 SE 9200744
(43) Veröffentlichungstag der Anmeldung: 15.09.1993
(73) Patentinhaber: KVERNELAND KLEPP AS, N-4344 Kvernaland (NO)
(72) Erfinder: Skjaeveland, Magne, N-4062 Klepp St. (NO)
(74) Vertreter: König, Reimar, Dr.-Ing.

(56) Entgegenhaltungen:
- EP-A- 0 274 299
- EP-A- 0 450 436
- DE-A- 3 534 129
- NL-A- 8 403 768
- US-A- 3 476 191

## Beschreibung

Die Erfindung bezieht sich auf einen Drehpflug mit mindestens einem hinter dem Pflug angeordneten nachgezogenen Zusatzgerät, bei dem der Pflug und das Zusatzgerät über eine Drehverbindung mit sich horizontal in der Pflügerichtung erstreckender Drehachse miteinander verbunden sind.

Ein derartiger Drehpflug ist in der europäischen Offenlegungsschrift 0 274 299 beschrieben. Die Drehverbindung befindet sich im Bereich des hinteren Endes des Drehpflugs. Im Bereich der Drehverbindung befindet sich eine allseitig bewegliche Gelenkverbingung nach Art eines Kardangelenks, von wo eine Kuppelstange zum Nachziehgerät führt. Am Vorderende des Nachziehgeräts befindet sich eine weitere Gelenkverbindung, deren Achse waagerecht liegt und quer zur Zugrichtung verläuft. Die Länge der Zugstange und somit der Abstand zwischen den Gelenkverbindungen soll so groß sein, daß das Nachziehgerät um 90° gegenüber dem Drehpflug schwenken kann sowie ein ungehindertes Wenden des Drehpflugs mit Anheben und Schwenken der Drehverbindung möglich ist.

Mit diesem bekannten Drehpflug mit mindestens einem Zusatzgerät, beispielsweise einem Packer, einer Egge oder einer Sämaschine läßt sich die Bodenbearbeitung in der Weise rationalisieren, daß mehrere Arbeiten gleichzeitig durchgeführt werden. Hierzu gehören Pflügen, Verdichten, Eggen und Säen.

Es sind noch eine Reihe von weiteren Kombinationen mit Drehpflügen bekannt; diese bringen jedoch sämtlich bestimmte praktische Probleme mit sich. Darunter ist vor allem die Notwendigkeit zu erwähnen, das Zusatzgerät zusammen mit dem Pflug zu drehen bzw. zu wenden. Das macht es erforderlich, das Zusatzgerät für eine entsprechende Links- und Rechtsbewegung einzurichten. Das ist schwierig und hat zu wenig erfolgreichen Kompromißlösungen geführt.

Manche Lösungen verwenden gleichzeitig zwei getrennte Systeme, davon eines zum Links- und eines zum Rechtspflügen.

Die meisten Lösungen erlauben jedoch ein Entkoppeln des Zusatzgeräts am Ende einer Furche und ein erneutes Koppeln nach den Wenden des Traktors und des Pflugs, bevor die nächsten Furchen gezogen werden.

Der Erfindung liegt die Aufgabe zugrunde, die bei den herkömmlichen Gerätekombinationen auftretenden Nachteile zu vermeiden.

Die Lösung dieser Aufgabe besteht darin, daß der Pflug und das nachgezogene Zusatzgerät nur über eine Drehverbindung aus einer Hülse und einem Zapfen mit sich horizontal in der Pflugrichtung erstreckender Drehachse miteinander gekoppelt sind, wobei die Hülse oder der Zapfen einerseits starr mit dem Pflugrahmen oder einem Arm des Pflugrahmens und der Zapfen oder die Hülse andererseits starr mit dem Zusatzgerät verbunden sind.

Demgemäß besteht die Erfindung vor allem darin, daß ein Dreh- oder Wendepflug und ein Folge- bzw. Zusatzgerät nur über eine Drehverbindung miteinander verbunden sind, deren Drehachse im wesentlichen in einer horizontalen Ebene verläuft und sich im wesentlichen parallel zur Pflügerichtung erstreckt, so daß sich der Pflug drehen oder auch wenden läßt, ohne daß dies auch bei dem Zusatzgerät der Fall ist.

Damit ist u.a. der Vorteil verbunden, daß sich das Pfluggewicht und die an den Pflugkörpern wirksame, nach unten gerichtete Kraft auf das Zusatzgerät überträgt, für das somit eine Leichtbaukonstruktion ausreicht.

Bei einem aus der deutschen Patentschrift 35 34 129 bekannten Pflug wird auch der Packer stets in derselben Weise aus seiner rechten Arbeitsstellung in seine linke Arbeitsstellung gedreht wie der Pflug selbst. Demzufolge ergibt sich für die Walzen beim Rechtspflügen im Vergleich zum Linkspflügen eine umgekehrte Drehrichtung. Daraus folgt, das weitere, mit dem Packer verbundene Zusatzgeräte unabhängig von der Drehrichtung der Packerwalzen funktionieren müssen.

Selbstverständlich kann auch die Hülse der Drehverbindung starr mit dem Zusatzgerät und dementsprechend das freie Ende des Zapfens starr mit dem Pflugrahmen verbunden sein.

Unter den Vorteilen der erfindungsgemäßen Gerätekombination ist besonders zu erwähnen, daß das Folge- bzw. Zusatzgerät, beispielsweise ein Packer und/oder eine Egge und/oder eine Sämaschine, dem Pflug vollständig folgt und demgemäß beim Lenken des Pflugs das betreffende Zusatzgerät ebenfalls gelenkt bzw. geführt wird. Außerdem läßt sich ein Säen direkt hinter dem Pflug erreichen.

Bei bekannten Systemen wird teilweise noch im Bereich der zuvor gezogenen Furchen gesät und ist es nicht möglich, die Säbreite auf die Schnittbreite des Pflugs einzustellen, wie das bei dem erfindungsgemäßen Pflug der Fall ist. Das erfindungsgemäße System läßt sich auf einfache Weise automatisieren. Bei einem Trecker mit einem automatischen Pflug läßt sich eine Sämaschine sehr gut unter Berücksichtigung des zuvor bereits eingesäten Bereichs einstellen und ergibt sich eine automatische Wegmarkierung.

Die Erfindung wird nachfolgend anhand eines in der Zeichnung dargestellten Ausführungsbeispiels des näheren erläutert. In der Zeichnung zeigen:
- Fig. 1: eine Draufsicht auf einen Drehpflug mit einem Nachziehgerät in Gestalt einer Egge; und
- Fig. 2: die Seitenansicht des Geräts nach Fig. 1 in Kombination mit einem Balken und einem Sägerät.

Der Drehpflug 1 ist über eine Drehverbindung 2 mit einem Packer 3 verbunden.

Die Drehverbindung besteht aus einer Hülse 2' und einem Zapfen 2'', der drehbar und axial verschiebefest in der mit einem flachen Ansatz 2''' versehenen Hülse 2' gelagert ist.

Die Hülse 2' der Drehverbindung 2 ist über ihren flachen Ansatz 2''' mit einem Arm 4 verbunden, der seinerseits in Verbindung mit dem Pflugrahmen 5 steht. Das rückwärtige Ende des Arms 4 ist über zwei Verankerungsbolzen 6 mit dem flachen Ansatz 2''' der Drehverbindung 2 verbunden.

Das freie Ende des Zapfens 2'' ist bei 7 mit dem Packerrahmen verbunden.

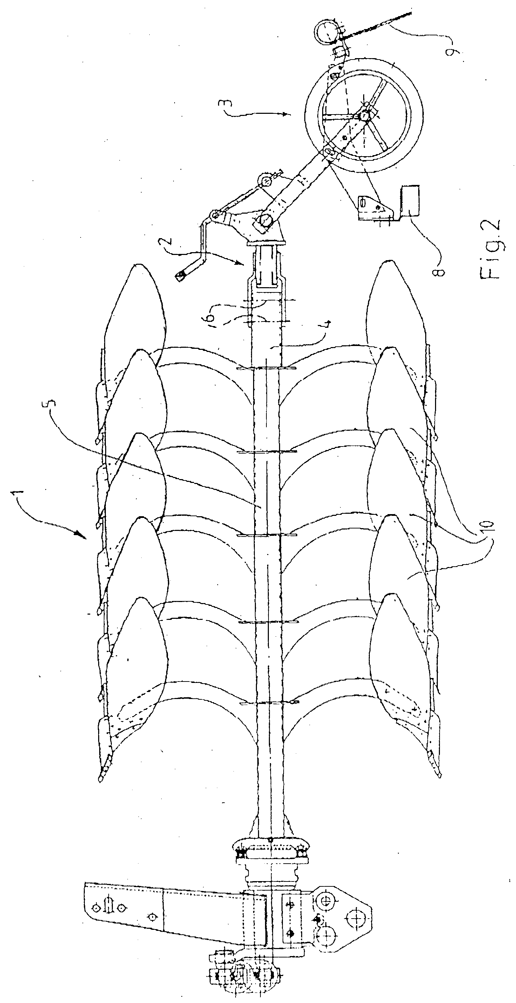

Bei dem Ausführungsbeispiel nach Fig. 2 ist der Packer 3 mit einem Balken 8 und Säfingern 9 verbunden.

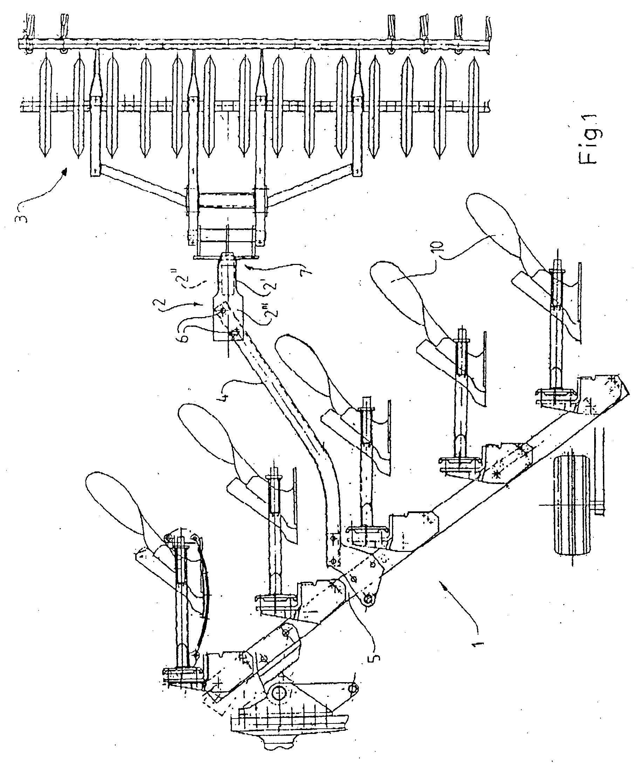

Bei dem erfindungsgemäßen Kombinationsgerät nach den Fig. 1 und 2 vollzieht sich das Drehen des Pflugs 1 wie folgt: Am Ende einer Furche werden der Pflug 1 und der Packer 3 angehoben und der Pflug ohne ein Drehen oder Wenden des Packers gedreht. Infolge der Drehverbindung 2 verbleibt der Packer 3 während des Drehens des Pflugs 1 in seiner Lage.

Bei einem erfindungsgemäßen Pflug mit einem Folgegerät ist damit u.a. der Vorteil verbunden, daß alle mit dem Packer 3 verbundenen Geräte wie der Balken 8 und die Säfinger 9 unabhängig davon, ob nun nach rechts oder nach links gepflügt wird, stets ihre Arbeitsrichtung beibehalten. Dies steht im Gegensatz zu bekannten Kombinationsgeräten, bei denen sich eine Umkehr der Arbeitsrichtung ergibt.

So ergibt sich aus Fig. 2 ohne weiteres, daß der Balken 8 stets vor und die Säfinger 9 stets hinter dem Packer 3 angeordnet sind, unabhängig davon, ob der Pflug 1 nun nach rechts oder nach links pflügt.

Damit ist der weitere Vorteile verbunden, daß sich mit dem erfindungsgemäßen Pflug jedes Nachziehgerät verwenden läßt, beispielsweise Scheibenpacker oder Kombinationen aus Scheibenpackern und Säfingern sowie Kombinationen aus Packer, Säfingern und Sämaschinen mit üblichen Krallen.

Wie bereits erwähnt, ist der Pflug 1 starr mit der Drehverbindung 2 verbunden. Demzufolge ist ein Drehen nur um die Längsachse des Zapfens 2'' möglich. Damit ist der Vorteil verbunden, daß das Gewicht des Pfluges und die an den Pflugkörpern wirksame, nach abwärts gerichtete Kraft auf den Packer 3 übertragen wird, der demzufolge ebenso wie andere Nachziehgeräte aus einer Leichtbaukonstruktion bestehen kann.

Normalerweise wird das Gewicht zur Zugkraftverbesserung auf den Traktor übertragen. Seit einiger Zeit geht jedoch die Entwicklung in Richtung Traktoren mit Vierradantrieb und einer daraus resultierenden größeren Zugkraft, die es erlaubt, die erwähnten Kräfte auf die Nachziehgeräte zu übertragen.

Die Nachziehgeräte, beispielsweise ein Packer, eine Egge oder eine Sämaschine, folgen vollständig der Pflugbewegung. Demzufolge lassen sich mit dem Pflug gleichzeitig auch die Nachziehgeräte steuern und lenken.

Bei der erfindungsgemäßen Gerätekombination wird das Saatgut direkt hinter dem Pflug ausgestreut. Hingegen gelangt bei bekannten Geräten das Saatgut teilweise in den zuvor bereits eingesäten Bereich und läßt sich die Säbreite nicht auf die Schnittbreite einstellen, wie das bei den erfindungsgemäß integrierten Geräten der Fall ist.

## Patentansprüche

1. Drehpflug mit mindestens einem hinter dem Pflug angeordneten nachgezogenen Zusatzgerät (3), bei dem
- der Pflug und das Zusatzgerät (3) über eine Drehverbindung mit sich horizontal in der Pflügerichtung erstreckender Drehachse miteinander verbunden sind,
- die Drehverbindung (2) aus einer Hülse (2') und einem Zapfen (2'') besteht,
- die Hülse (2') oder der Zapfen (2'') einerseits starr mit dem Pflugrahmen (5) oder einem Arm (4) des Pflugrahmens (5) und
- der, b.z.w. die nicht so fixierte Zapfen (2''), b.z.w. Hülse (2') andererseits starr mit dem Zusatzgerät (3) verbunden ist, so daß ein freies Drehen des Zusatzgerätes (3) gegenüber dem Pflugrahmen (5) nur um die sich horizontal in der Pflügerichtung erstreckende Drehachse möglich ist.

## Claims

1. A reversible plough with at least one towed additional device (3) arranged behind the plough, in which
- the plough and the additional device (3) are connected to each other by a swivel connection having a rotational axis extending horizontally in the ploughing direction,
- the swivel connection (2) consists of a casing (2') and a spigot (2''),
- the casing (2') or the spigot (2'') is rigidly connected on one side to the plough frame (5) or an arm (4) of the plough frame (5) and the respective thus non-fixed spigot(2'') or housing (2') is rigidly connected at the other side with the additional device (3), so that free rotation of the additional device (3) relative to the plough frame (5) is only possible about the rotational axis extending horizontally in the ploughing direction.

## Revendications

1. Charrue réversible munie d'au moins un accessoire (3) tracté disposé à l'arrière de la charrue, dans laquelle :
- la charrue et l'accessoire (3) sont reliés l'un à l'autre par une liaison tournante dont l'axe de rotation s'étend horizontalement dans la direction de labourage,
- la liaison tournante (2) se compose d'une douille (2') et d'un tenon (2''),
- la douille (2') ou le tenon (2'') sont solidaires d'un côté du châssis de charrue (5) ou d'un bras (4) du châssis de charrue (5), et
- celui d'entre le tenon (2'') et la douille (2') qui n'est pas ainsi fixé est solidaire, de l'autre côté, de l'accessoire (3), de sorte qu'une libre rotation de l'accessoire (3) par rapport au cadre de charrue (5) n'est possible qu'autour de l'axe de rotation qui s'étend horizontalement dans la direction de labourage.
